Europäisches Patentamt

European Patent Office

Office européen des brevets

(19)

(11) Publication number: **0 096 515**
A1

(12) **EUROPEAN PATENT APPLICATION**

(21) Application number: 83303042.2

(22) Date of filing: 26.05.83

(51) Int. Cl.³: **H 02 K 21/08**
**H 02 K 1/24**

(30) Priority: 01.06.82 JP 93737/82

(43) Date of publication of application:
21.12.83 Bulletin 83/51

(84) Designated Contracting States:
DE FR GB

(71) Applicant: FANUC LTD
5-1, Asahigaoka 3-chome Hino-shi
Tokyo 191(JP)

(72) Inventor: Kawada, Shigeki
346-15 Shimoda Hino
Tokyo(JP)

(72) Inventor: Amemiya, Yoichi
1019-357 Nishiterakatachou Hachiouji
Tokyo(JP)

(72) Inventor: Sogabe, Masatoyo
3-27 Tamadaira Hino
Tokyo(JP)

(72) Inventor: Iwamatsu, Noboru
3-27 Tamadaira Hino
Tokyo(JP)

(74) Representative: Billington, Lawrence Emlyn et al,
HASELTINE LAKE & CO Hazlitt House 28 Southampton
Buildings Chancery Lane
London WC2A 1AT(GB)

(54) A synchronous motor employable as a servomotor.

(57) A synchronous electrical motor which may be used as a
servomotor and which includes a cylindrical rotor comprising an axially extending shaft (3) and an even number of
spaced-apart permanent magnets (1) arranged around the
shaft (3), each of which magnets (1) extends radially
outwards with respect to the shaft (3) and is arranged such
that its magnetic axis (N-S) extends transversely to a radial
plane which contains the axis of the rotor and passes
through the centre of the magnet (1), the magnets (1) being
so arranged that the directions of their polarities alternate
one after another along the circumference of the rotor, the
rotor further comprising a number of yokes (2), the same in
number as the magnets (1), interposed in the spaces
between the magnets (1) so as to function as the magnetic
poles of the rotor, and magnetic shielding means (21) which
partially cover the radially outer faces (15) of the magnets (1).

Fig.4

## A SYNCHRONOUS MOTOR EMPLOYABLE
## AS A SERVOMOTOR

The present invention relates to a synchronous motor employable as a servomotor.

In the prior art, a permanent magnet field type direct current motor is conventionally employed as a servomotor. A tendency has been recognized, however, for permanent magnet rotating field type synchronous motors to replace the direct current motors as servomotors. This is because a synchronous motor inherently has various advantages and features as follows:

(a) since a synchronous motor is a brushless motor, it is free from potential interference to wireless communication systems;

(b) since no commutator is required, a synchronous motor is free from the problem of wear arising with commutators; and

(c) since the rotor of a rotating field type synchronous motor is mechanically durable, rapid acceleration and/or retardation of the rotor is or are possible for such a synchronous motor, and it is relatively easy to adjust the dynamic balance of the rotor thereof.

In addition to the foregoing advantages and features inherent in a synchronous motor, an additional advantage is a feature which enhances the possibility of employment of a synchronous motor as a servomotor. Namely, a regulation system can be applied to a synchronous motor as follows:

(a) firstly, the angular position of the field pole of a synchronous motor is monitored employing a means for detection of the angular position of a rotary object, such as a resolver, a pulse coder, et al;

(b) secondly, following the angular position detected above but independently of the value of torque required for the synchronous motor, there is generated a polyphase alternating current voltage which generates a rotating field which leads the field pole e.g. by $\pi/2$ in terms of electric angle. As a result, the frequency and phase of the polyphase alternating current voltage synchronizes with the rotation of the rotor;

(c) thirdly, the amplitude of the polyphase alternating current voltage is regulated in response to the value of torque required, but independently of the rotational speed of the synchronous motor;

(d) fourthly, the polyphase alternating current voltage is supplied to the stator of the synchronous motor. Then, the synchronous motor is allowed to maintain the internal phase angle (an angular difference between a rotating field and the angular position of the corresponding field pole represented in terms of electric angle) at a fixed value, e.g. $\pi/2$, throughout the entire period of operation, independently of the value of torque required for the synchronous motor.

As a result, combined application of the foregoing regulation system and a conventional regulation system which provides an appropriate value of amplitude for the foregoing polyphase alternating current voltage or an appropriate value of current for the synchronous motor, in response to the value of torque required, provides a synchronous motor with the following various advantages and features which are extremely significant particularly from the viewpoint of servo application. Namely, a synchronous motor is allowed:

(a) to maintain rotation at a desired speed throughout the entire period of operation from commencement to termination of the rotation including the acceleration and retardation periods, because the field pole is allowed to synchronize with the

-3-       0096515

rotating field generated by the stator throughout the entire period of operation;

(b) to rotate precisely by the angle corresponding to the amount of cumulative frequency or to the product of the regulated frequency of the foregoing polyphase alternating current voltage and the length of time wherein the voltage is applied (this means a precise regulation of the rotation of a motor in a digital manner);

(c) to hold the rotor at a desired angular position; and

(d) to generate any desired value of torque, independently of the rotational speed required.

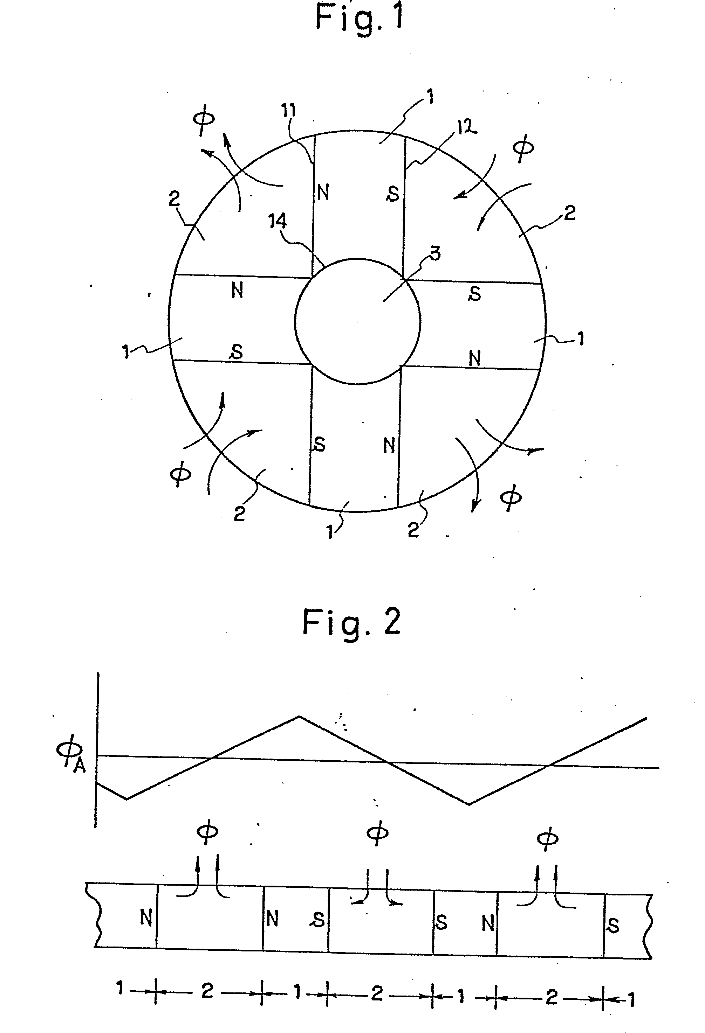

In addition to the foregoing significant improvements applicable to the regulation system of a synchronous motor, various other efforts have been made in order to improve the physical structure of a synchronous motor. One will be described below with reference to Figure 1.

Fig. 1 shows a schematic cross-sectional view of a rotor of an improved model of a rotating field cylindrical rotor type synchronous motor. An even number (e.g. four as shown) of permanent magnets 1 are arranged along an axis or shaft 3. Each magnet 1 has a North pole 11 and a South pole 12 as shown, lying on opposite sides of a radial plane extending through the centre of the magnet and containing the axis of the shaft 3. Yokes 2 each having the cross-sectional shape of a sector of a circle are interposed between the permanent magnets 1.

None of the magnetic poles 11 and 12 of the permanent magnet 1 is arranged to lie against the surface of the shaft 3, because the magnetic axis of each magnet 1 extends at right angles to the aforementioned radial plane, and not along it. This is the important difference between this improved rotor and a previously conventional rotor. In other words, the magnetic poles 11 and 12 lie against the sector-shaped yokes 2, to allow magnetic flux to pass through each magnet 1 in a direction parallel to that tangent to the shaft 3 which is at right angles to the aforementioned radial plane through the centre of the magnet.

The polarity of the permanent magnets 1 is selected such that their magnetic polarities alternate along the circumference of the external surface of the rotor, as shown in the Figure. As a result, the magnetic flux is caused to flow in and out of the rotor through the arc-shaped external surfaces of the yokes 2 rather than through the external surfaces of the permanent mangets 1. In other words, the yokes 2 rather than the permanent magnets 1 function as the magnetic poles of the rotor.

The foregoing structure of the rotor of a synchronous motor provides the following advantages, namely;

(a) a larger amount of magnetic flux is available, because the arc-shaped external surface areas of the yokes are relatively large;

(b) sine wave distribution is readily realized for the geometrical distribution of magnetic flux along the arc-shaped external surface of the yoke 2 or along the airgap between the sector-shaped yoke 2 and the stator (not shown); and

(c) utilization of a larger area of the external surface of a rotor is allowed.

In a case where the already described regulation system is applied to the foregoing improved synchronous motor rotor as described with reference to Fig. 1, the following drawback which will be described below referring to Fig. 2, is recognized as being inevitable.

If the internal phase angle is maintained at $\pi/2$ in terms of electric angle, the correlation between the geometrical distribution of the magnetic flux density generated by armature reaction and the extended arrangement of alternating permanent magnets and yokes along the circumference of the external surface of the rotor, turns out to be as shown in Fig. 2. In other words, the angular position at which the magnetic flux density generated by armature reaction is a maximum, is continuously associated with the centre of a permanent magnet 1. This means that the magnetic flux generated by armature reaction flows in and out of the rotor through the surfaces of the permanent magnets 1, rather than through the surfaces of the yokes 2. This further means a possibility that the magnetic flux generated by armature reaction may cause demagnetization for either the right half or the left half of the permanent magnet 1, depending on the polarity of the magnetic flux generated by armature reaction or depending on the direction of rotation of the synchronous motor.

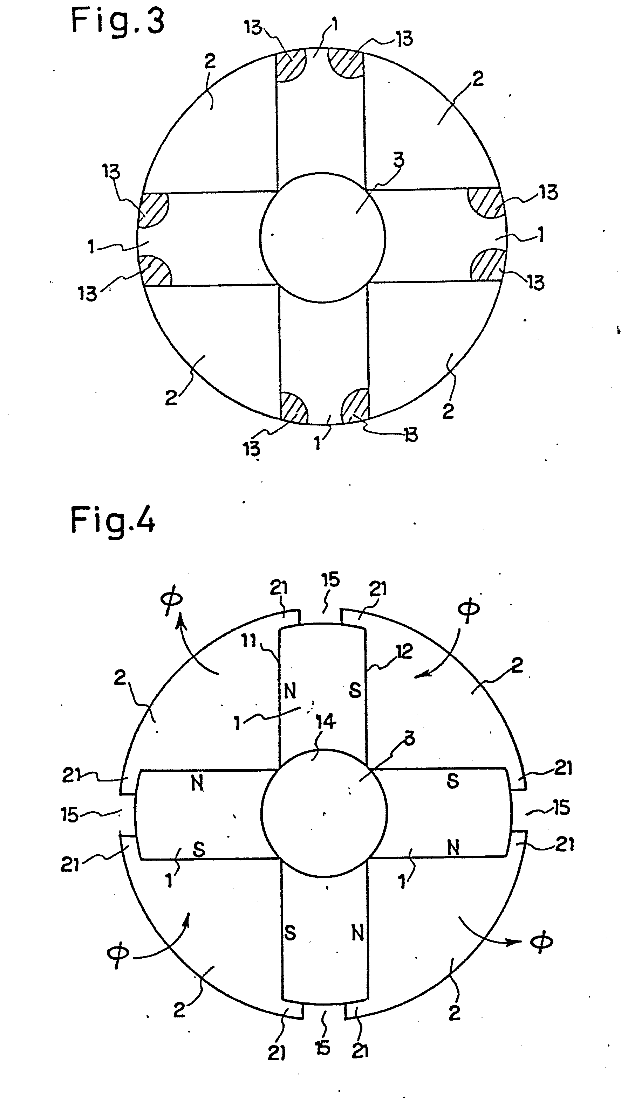

As a result, a drawback is inevitable that the edges of the permanent magnet 1, or the portions indicated by 13 in Fig. 3, are demagnetized by the magnetic flux generated by armature reaction.

According to the present invention there is provided a synchronous electrical motor which may be used as a servomotor and which includes a cylindrical rotor comprising an axially extending shaft and an even number of spaced-apart permanent magnets arranged around the shaft, each of which magnets extends radially outwardly with respect to the shaft and is arranged such that its magnetic axis extends transversely to a radial plane which contains the axis of the rotor and passes through the centre of the magnet, the magnets being so arranged that the directions of their polarities alternate one after another along the circumference of the rotor, the rotor further comprising a number of yokes, the same in number as the magnets, interposed in the spaces between the magnets so as to function as the magnetic poles of the rotor, and magnetic shielding means which partially cover the radially outer faces of the permanent magnets.

The magnetic shielding means reduces demagnetisation caused by armature reaction.

In one embodiment, said magnetic shielding means is provided by at least one circumferential extension from each of said yokes.

Possibly, for each respective magnet the magnetic shielding means comprises two circumferential extensions from respective ones of the yokes on the two sides of the magnet, there being an axially elongate space between these two extensions.

Accordingly, an embodiment of the magnetic shielding means may be an additional yoke portion which extends from the original yoke to cover a longitudinal rectangular area of the radially outer face of a permanent magnet, such longitudinal rectangular area being selected along either the righthand edge or the left-hand edge of the permanent magnet depending on the direction of rotation of the synchronous motor.

It is alternatively possible to provide two additional yoke portions extending towards each other from two different original yokes which are located in contact with a particular permanent magnet, leaving an open space or slit between the two additional yoke portions to expose the radially outer face of the magnet. This is effective to protect the permanent magnet from the demagnetization caused by armature reaction, regardless of the direction of rotation of the synchronous motor.

The preferable dimensions of the additional yoke portions are as follows:

(a) extension of each of the additional yoke portions does not exceed ¼ of the circumferential length of the radially outer surface of the permanent magnet.



In other words, the length of the open space or gap left between the additional yoke portions is not less than ½ of the circumferential length of the radially outer surface of the permanent magnet. This is to prevent the magnetic flux generated by the permanent magnet from reaching from one yoke to another without interlinking with the stator winding.

(b) radial thickness of the additional yoke portion does not exceed 1/3 of the circumferential extent of the additional yoke portion. This is to prevent the additional yoke portion from causing an unnecessarily large decrease of the cross-sectional area of the magnetic path for the permanent magnet.

Another possible embodiment of the magnetic shielding means is a cylinder having a small thickness, the cylinder surrounding the remainder of the rotor and having a plurality of parallel slits produced along the external surface of the permanent magnets.

For a better understanding of the invention and to show how it may be put into practice, reference will now be made by way of example to the accompanying drawings in which:

Fig. 1 is a schematic cross-sectional view of the rotor of a rotating field cylindrical rotor type synchronous motor available in the prior art;

Fig. 2 is a schematic diagram showing the correlation between the geometrical distribution of the magnetic flux density generated by armature reaction and the extended arrangement of alternating combination of the permanent magnets and yokes along the circumference of the external surface of the rotor of a synchronous motor available in the prior art (shown in Fig. 1);

Fig. 3 is a schematic cross-sectional view of the rotor of a synchronous motor available in the prior art, the view showing the geometrical positions at which the permanent magnets which are part of the rotor, incur demagnetization due to armature reaction;

Fig. 4 is a schematic cross-sectional view of the rotor of a rotating field cylindrical rotor type synchronous motor in accordance with one embodiment of the present invention;

Fig. 5 is a schematic cross-sectional view of the rotor of a rotating field cylindrical rotor type synchronous motor in accordance with a modification of the foregoing embodiment of the present invention;

Fig. 6 is a perspective view of the rotor of a rotating field cylindrical rotor type synchronous motor in accordance with another embodiment of the present invention; and

Fig. 7 is a schmatic cross-sectional view of the rotor of Fig. 6.

Figures 1 to 3 have already been described.

Referring to Fig. 4, four permanent magnets 1, each having substantially the shape of a rectangular parallelepiped, are arranged along a rotor shaft 3. Of course the cross-section of each magnet 1 as shown is not strictly a rectangle, but it approximates thereto and could be a strict rectangle if so desired. Four yokes 2, each having substantially the shape of a sector of a circle, and each of which is to function as a magnetic pole of the rotor, are interposed between the permanent magnets 1.

Each of the permanent magnets 1 is arranged such that its magnetic North and South poles 11 and 12 lie against the adjacent sector-shaped yokes 2 rather than having one pole against the shaft 3. The magnetic poles 11 and 12 are formed at the two flat faces of each magnet 1, and the magnetic axis of each magnet 1 thus lies parallel to a tangent, to the shaft 3, which extends at right angles to a radially extending plane containing the axis of the shaft 3 and extending through the magnet 1 half-way between the two flat faces of the magnet 1.

Further, the permanent magnets 1 are arranged such that the directions of their polarities alternate one after another along the circumferential periphery of the rotor, as shown in the Figure.  Thus, starting from the top magnet 1, the polarities alternate NS, SN, NS, SN for the four magnets 1, travelling clockwise around the circumference of the rotor.  As a result, the magnetic flux $\phi$ flows in and out of the rotor through the arc-shaped external surfaces of the yokes 2 rather than through the external surfaces of the permanent magnets 1.

The arc-shaped external peripheral surface 15 of each permanent magnet 1 is partly covered, from its outer edges inwards, by a pair of additional yoke portions 21, there remaining a gap between each such pair  of additional yoke portions, which gap extends along the axial length of the rotor.  Each additional yoke portion 21 is produced by extending circumferentially each radially outer corner of each yoke 2, and each yoke portion 21 has substantially the shape of an elongate rectangular parallelepiped extending axially along the rotor.   The extension or the length of each additional yoke portion 21 along the circumference of the rotor is approximately ¼ of the length of the arc-shaped external surface 15 of the associated permanent magnet 1, and the radial thickness of each additional yoke portion 21 is approximately 1/3 of the circumferential extension thereof.

Being supplied with an electric current which has a frequency and phase which are compatible with the internal phase angle of e.g. $\pi/2$, a synchronous motor having the rotor of Fig. 4  will generate armature reaction having a geometrical distribution as shown in Fig. 2 with reference to the geometrical positions of the permanent magnets 1 and the yokes 2.  In other words, the arc-shaped external surface 15 of each permanent magnet 1 encounters a large amount of magnetic flux density.  Therefore, unless the arc-shaped external surface 15 is partly covered by the additional yoke portion 21 which functions as a magnetic shield, a considerable amount of magnetic flux flows in or out of the permanent magnet 1. However, since one half of the area of the arc-shaped external surface 15 is covered by the additional yoke portions 21, each of which is an extension of the yoke 2, the magnetic flux due to armature reaction is allowed to flow in or out of the adjacent yokes 2, after passing through the additional yoke 21, rather than in or out of the permanent magnet 1, resultantly causing no demagnetization for any part of the permanent magnet 1. In other words, the magnetic flux density is kept unchanged at the positions shown by 13 in Fig. 3, and the demagnetisation incurred in these positions 13 in the Fig. 3 rotor, is avoided in the Fig. 4 rotor owing to the provision of the additional yoke portions 21 in Fig. 4.

For the purpose of increasing the magnitude of the magnetic shield effect produced by the additional yoke portions 21, it might be thought that it would be preferable to cover a larger area of the arc-shaped external surface 15 of the permanent magnet 1 by the additional yokes 21. However, the additional yoke portions 21 may undesirably short-circuit the magnetic flux of the permanent magnets 1 if their circumferential extensions are too large. Therefore, a limitation should be imposed on the circumferential extension of each additional yoke 21.

Incidentally, a large amount of magnetic flux density in an additional yoke portion 21 causes leakage of magnetic flux due to armature reaction, into the associated permanent magnet 1. In order to decrease this possibility, it might be thought that it would be preferable to provide a greater thickness for each additional yoke portion 21. However, this is accompanied by a smaller magnitude of cross-sectional area of the path for the magnetic flux generated by the permanent magnet 1. This is not compatible with the original object of the foregoing improved structure of rotor of a synchronous motor available in the prior art. Therefore, a limitation should be imposed on the thickness of the additional yokes 21.

Results of experiments have determined that the circumferential extension of each additional yoke portion 21 is preferably as great as possible within the limitation that it does not exceed 1/4 of the circumferential length of the arc-shaped external surface 15 of the permanent magnet 1, and the thickness of the additional yoke 21 is preferably as large as possible within the limitation that it does not exceed 1/3 of the circumferential extension thereof.

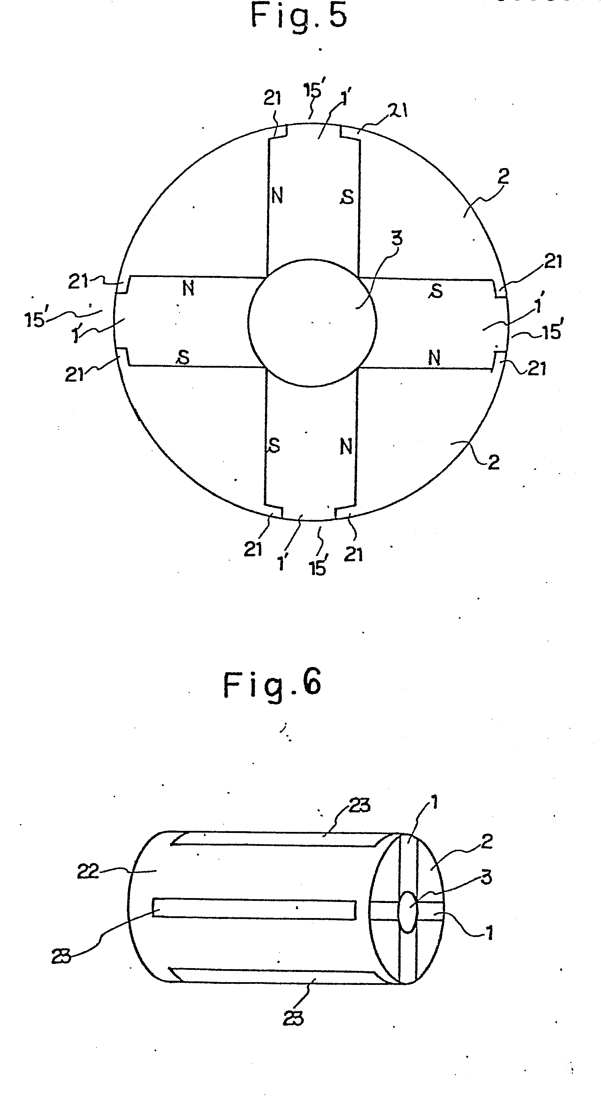

Fig. 5 shows a modification of Fig. 4, in which that outer arc-shaped radially external surface portion 15' of each permanent magnet 1' which is not covered by the yoke portions 21 is extended radially outwards to lie on the circumference of the rotor with the external surfaces of the yokes 2 and the additional yoke portions 21. This is effective to increase the magnetomotive force without increasing the radius of the rotor.

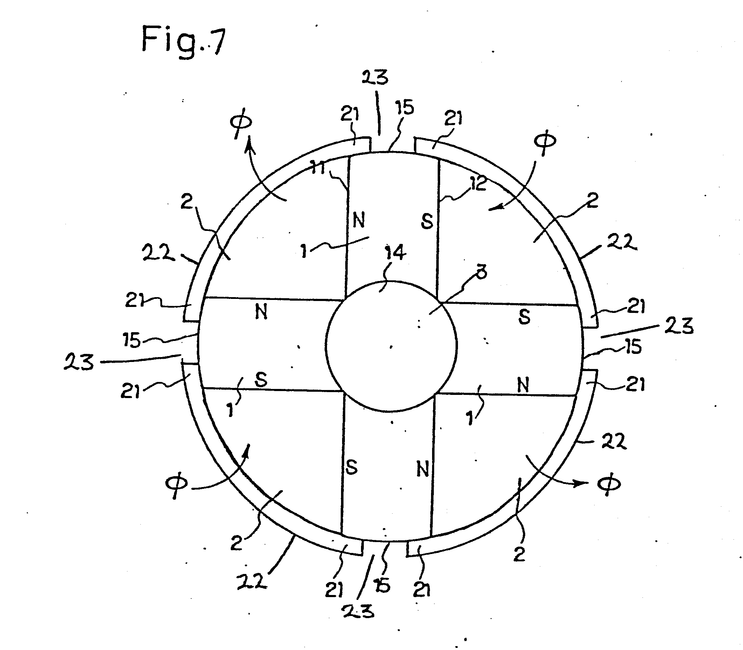

Referring to Fig. 6, the magnetic shield is provided by a cylinder 22 having a small thickness and which surrounds the rotor. The cylinder 22 is provided with a plurality of longitudinal parallel slits 23 produced along the center of the rectangular external surfaces of the permanent magnets 1. This is effective to simplify the production process of the rotor.

Figure 6 shows a rotor according to the present invention which compirses permanent magnets 1, yokes 2 (without additional yoke portions 21) and a shaft 3, all assembled as shown in Figure 1. In order to produce a magnetic shielding effect at the radially outer corners of the permanent magnets 1, the thin cylinder 22 of magnetic material (possibly the same material as the yokes 2) is placed around the assembly of magnets 1, yokes 2 and shaft 3.

The cylinder 22 comprises a number of axially extending slots 23 which coincide with the radially outer faces of the magnets 1, but which have a circumferential extent which is smaller than that of the radially outer faces of the magnets 1. This produces a cross-sectional configuration as shown in Fig. 7 along the length of the slots 23, which means that in effect each yoke 2 is extended radially outwardly by the thickness of the cylinder 22 with, effectively, additional yoke portions 21 being provided (similarly as in Figs. 4 and 5) by those portions of the cylinder 22 which define the edges of the slots 23. The slots 23 are preferably so arranged and dimensioned, and the thickness of the cylinder 22 is preferably such, that the same dimensional limitations apply to the additional yoke portions 21 of Fig. 7 as apply to these same portions 21 in Figures 4 and 5. These dimensions have already been discussed fully in respect of Figure 4.

Although this invention has been described with reference to specific embodiments, this description is not meant to be construed in a limiting sense. Various modifications of the disclosed embodiments, as well as other embodiments of this invention, will be apparent to persons skilled in the art upon reference to the description of this invention. It is therefore contemplated that the appended claims will cover any such modifications or embodiments as fall within the true scope of this invention as defined by these claims.

It is to be appreciated that the described rotor will preferably be used in conjunction with a stator comprising windings for generating a rotating field the pole pitch of which is the same as that of the rotor.

Claims:

1.      A synchronous electrical motor which may be used as a servomotor and which includes a cylindrical rotor comprising an axially extending shaft and an even number of spaced-apart permanent magnets arranged around the shaft, each of which magnets extends radially outwardly with respect to the shaft and is arranged such that its magnetic axis extends transversely to a radial plane which contains the axis of the rotor and passes through the centre of the magnet, the magnets being so arranged that the directions of their polarities alternate one after another along the circumference of the rotor, the rotor further comprising a number of yokes, the same in number as the magnets, interposed in the spaces between the magnets so as to function as the magnetic poles of the rotor, and magnetic shielding means which partially cover the radially outer faces of the permanent magnets.

2.      A motor according to claim 1, wherein said magnetic shielding means is provided by at least one circumferential extension from each of said yokes.

3.      A motor according to claim 2, wherein for each respective magnet the magnetic shielding means comprises two circumferential extensions from respective ones of the yokes on the two sides of the magnet, there being an axially elongate space between these two extensions.

4.      A motor according to claim 1, wherein the magnetic shielding means is provided by a cylinder which surrounds the remainder of the rotor and comprises a plurality of parallel slots to expose parts of the radially outer faces of the permanent magnets, the magnetic shielding being provided by the edges of these slots.

5.      A motor according to any preceding claim, wherein the magnetic shielding means covers no more than $\frac{1}{2}$ the circumferential extent of the radially outer face of each permanent magnet.

6. A motor according to claim 5 when appended to claim 3, wherein each of said two circumferential extensions does not exceed ¼ of the circumferential extent of the radially outer face of the associated permanent magnet.

7. A motor according to claim 6, wherein the radial thickness of each circumferential extension does not exceed 1/3 of its circumferential extent.

8. A motor according to any preceding claim, wherein each of the magnets has substantially the shape of a rectangular parallelepiped.

9. A motor according to any preceding claim, wherein each of the yokes has substantially the shape of a sector of a circle.

10. A motor according to any preceding claim, including a stator comprising windings for generating a rotating field the pole pitch of which is the same as that of the rotor.

11. A motor according to any preceding claim, wherein said permanent magnets have arc-shaped radially outer faces.

# Fig. 1

# Fig. 2

Fig.3

Fig.4

# Fig.5

# Fig.6

Fig.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 075 274 (INSTITUTE PO ELEKTROPROMISHLENOST) * Complete document * | 1-3,5-9 | H 02 K 21/08<br>H 02 K 1/24 |
| A | US-A-3 072 813 (M.F. REIJNST et al.) * Column 2, lines 32-57 * | 1 | |
| A | DE-U-1 848 663 (DEUTSCHE EDELSTAHLWERKE) * Page 2, paragraph 2 - page 4, paragraph 3 * | 1 | |
| A | GB-A-2 062 977 (NORTHERN ENGINEERING INDUSTRIES) * Figure 5 * | 1 | |
| A | FR-A-1 150 327 (WIPAC DEVELOPMENT) * Page 1, right-hand column, last paragraph - page 2, left-hand column, paragraph 2 * | | TECHNICAL FIELDS SEARCHED (Int. Cl. ³)<br><br>H 02 K 1/00<br>H 02 K 21/00 |

The present search report has been drawn up for all claims

| Place of search | Date of completion of the search | Examiner |
|---|---|---|
| BERLIN | 11-08-1983 | GESSNER E A F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82